# EUROPÄISCHE PATENTANMELDUNG

(11) **EP 1 255 393 A2**
(43) Veröffentlichungstag der Anmeldung: **06.11.2002**
(21) Anmeldenummer: 02100342.1
(22) Anmeldetag: 05.04.2002
(51) Int. Cl.: H04L 29/06, H04L 29/14, H04L 12/56

(54) **Verfahren zur Bereitstellung von Daten in einem verteilten Kommunikationssystem**

(30) Priorität: 24.04.2001 DE 10120064
(71) Anmelder: SIEMENS AKTIENGESELLSCHAFT, 80333 München (DE)
(72) Erfinder: Neuhaus, Ralf, 44534, Lünen (DE); Uecker, Rainer, 45470, Mühlheim (DE)

(57) **Zusammenfassung**

Gemäß dem erfindungsgemäßen Verfahren werden übergreifend benötigte Daten mehrfach in unterschiedlichen Server-Einheiten (ZS, DS, S-E, S-I) des verteilten Kommunikationssystems (VKS) gespeichert. Zugriffe auf die Daten ausführende Peripherie-Einheiten (PBX1, PBX4) des verteilten Kommunikationssystems (VKS) ermitteln beim Hochfahren des verteilten Kommunikationssystems (VKS) einmalig eine Verbindungsqualität zu den jeweiligen Server-Einheiten (ZS, DS, S-E, S-I), wobei nachfolgend ein Datenzugriff auf diejenige Server-Einheit (ZS) mit der besten Verbindungsqualität erfolgt. Bei einem Ausfall dieser Server-Einheit (ZS) erfolgt ein Datenzugriff auf eine Server-Einheit (DS) mit einer geringeren Verbindungsqualität.

## Beschreibung

Aufgrund einer sehr geringen Ausfallwahrscheinlichkeit bei modernen Kommunikationssystemen werden bei diesen Kommunikationssystemen nur in speziellen Anwendungsfällen Ausfallmechanismen, wie beispielsweise eine doppelte Datenhaltung innerhalb einer Einheit für den Fall eines Datenverlustes, vorgesehen. Insbesondere bei kleineren und mittleren Kommunikationssystemen ist der mit einer Implementierung von Ausfallmechanismen verbundene Aufwand unverhältnismäßig groß gegenüber dem damit erreichten Nutzen.

Häufig sind moderne Kommunikationssysteme als verteilte Kommunikationssysteme, z.B. ein Filialsystem einer Bank, ausgestaltet. Bei verteilten Kommunikationssystemen sind die einzelnen Einheiten des Kommunikationssystems - beispielsweise Kommunikationsserver oder Kommunikationsanlagen - über ein Netzwerk miteinander verbunden. Die einzelnen Einheiten des verteilten Kommunikationssystems können dabei sowohl innerhalb eines Standorts, aber auch in unterschiedlichen Städten oder sogar unterschiedlichen Ländern angeordnet sein. Ein derartiges verteiltes Kommunikationssystem ist bereits aus der deutschen Patentanmeldung mit dem amtlichen Anmeldekennzeichen 100 46 319.3 bekannt, wobei die einzelnen Einheiten des Kommunikationsnetzes über ein IP-orientiertes Netzwerk miteinander verbunden sind. Das verteilte Kommunikationssystem umfasst einen zentralen Kommunikationsserver durch den eine Steuerung der Kommunikation zwischen den einzelnen Einheiten, d.h. den Kommunikationsanlagen, des Kommunikationssystems erfolgt.

Hierbei werden übergreifend für alle Einheiten des Kommunikationssystems benötigte Daten in einer zentralen Datenbasis des zentralen Servers gespeichert. Ein Beispiel für derartige in einem verteilten Kommunikationssystem übergreifend benötigte Daten sind beispielsweise sogenannte "Call-Adress-Resolution Daten". Durch diese "Call-Adress-Resolution Daten" erfolgt eine Zuordnung einer IP-Adresse zu einer Rufnummer, wobei die IP-Adresse diejenige Einheit des verteilten Kommunikationssystems eindeutig identifiziert, an der das der Rufnummer zugeordnete Endgerät angeschlossen ist. Fällt nun der zentrale Server aus, stehen die benötigten Informationen im Kommunikationssystem nicht mehr zur Verfügung und eine Kommunikation zwischen den einzelnen Einheiten des verteilten Kommunikationssystems ist nicht mehr möglich.

Um auch bei einem Ausfall des zentralen Servers eine Kommunikation zwischen den Einheiten des Kommunikationssystems ermöglichen zu können, sind in den einzelnen Einheiten des Kommunikationssystems jeweils kleine Speichereinheiten - in der Literatur häufig als Cache-Speicher bezeichnet - vorgesehen, in denen die wichtigsten einheiten-spezifischen Daten gespeichert werden. Hierbei werden jedoch nicht die kompletten Daten gespeichert. Somit ist bei einem totalen Ausfall des Servers eine uneingeschränkte Kommunikation erst wieder nach einer manuellen Wiederinbetriebnahme des zentralen Servers möglich, was in der Regel zu längeren Ausfall- bzw. Verzögerungszeiten führt.

Zur Reduzierung der Ausfall- bzw. Verzögerungszeiten in einem verteilten Kommunikationssystem wurde bereits in der deutschen Patentanmeldung mit dem amtlichen Anmeldekennzeichen 101 01 754.5 ein Verfahren zur automatischen Wiederherstellung von Daten vorgeschlagen, bei dem infolge eines Ausfalls einer zentralen Datenbasis des verteilten Kommunikationssystems in dezentralen Datenbasen gespeicherte, übergreifend benötigte Daten automatisch an eine Server-Einheit des verteilten Kommunikationssystems übermittelt werden. In der Server-Einheit werden die empfangenen übergreifend benötigten Daten durch die Server-Einheit in einer der Server-Einheit zugeordneten Datenbasis zu einer Kopie der zentralen Datenbasis zusammengefügt .

Der vorliegenden Erfindung liegt die Aufgabe zugrunde, ein alternatives Verfahren anzugeben, durch welches bei einem Ausfall des zentralen Servers eine schnelle Verfügbarkeit von übergreifend benötigten Daten ermöglicht wird.

Die Lösung dieser Aufgabe erfolgt erfindungsgemäß mit den Merkmalen des Patentanspruchs 1.

Ein wesentlicher Vorteil des erfindungsgemäßen Verfahrens besteht darin, dass durch die Speicherung von übergreifend benötigten Daten in unterschiedlichen Server-Einheiten die Netzlast zu einer zentralen Server-Einheit deutlich verringert werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, dass für die Ermittlung einer Verbindungsqualität zwischen einer Peripherie-Einheit und einer Server-Einheit des verteilten Kommunikationssystems unterschiedliche Kriterien herangezogen werden können, so dass auf einfache Weise individuelle Anforderungen unterschiedlicher Teilnehmer berücksichtigt werden können.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten; und
- Fig. 2:: ein Ablaufdiagramm zur Veranschaulichung der beim erfindungsgemäßen Verfahren ablaufenden wesentlichen Verfahrensschritte.

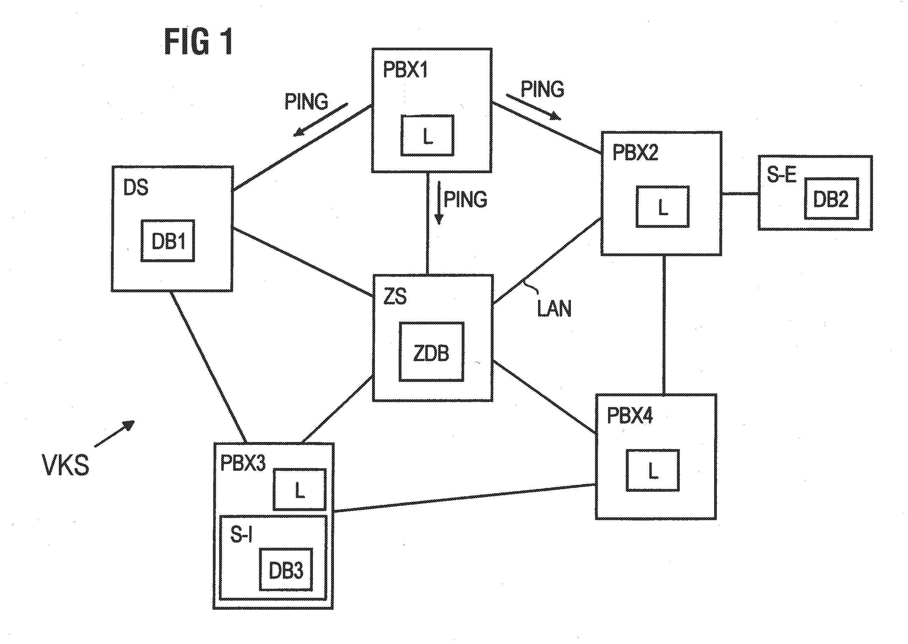

Fig. 1 zeigt ein verteiltes Kommunikationssystem VKS bestehend aus einem zentralen Server ZS und dezentralen Peripherie-Einheiten. Die dezentralen Peripherie-Einheiten umfassen im vorliegenden Ausführungsbeispiel einen dezentralen Server DS und vier Kommunikationsanlagen PBX1,...,PBX4. Die einzelnen Einheiten des verteilten Kommunikationssystems sind dabei über IP-orientierte Verbindungsleitungen, beispielsweise ein lokales Netzwerk LAN, miteinander verbunden.

Der zentrale Server ZS umfasst eine zentrale Datenbasis ZDB, in der übergreifend für alle peripheren Einheiten DS, PBX1,...,PBX4 des verteilten Kommunikationssystems VKS benötigte Daten gespeichert werden. Die übergreifend benötigten Daten umfassen beispielsweise sogenannte "Call-Adress-Resolution Daten", durch die eine Zuordnung einer IP-Adresse zu einer Rufnummer erfolgt, wobei die IP-Adresse diejenige Einheit des verteilten Kommunikationssystems VKS eindeutig identifiziert, an der ein der Rufnummer zugeordnetes - nicht dargestelltes - Endgerät angeschlossen ist.

Der dezentrale Server DS umfasst eine im dezentralen Server DS implementierte lokale Datenbasis DB1. Des weiteren ist an der zweiten Kommunikationsanlage PBX2 eine externe Server-Einheit S-E angeschlossen, wobei eine lokale Datenbasis DB2 in der externen Server-Einheit S-E implementiert ist. In der dritten Kommunikationsanlage PBX3 ist eine interne Server-Einheit S-I implementiert, wobei wiederum eine lokale Datenbasis DB3 in der internen Server-Einheit S-I integriert ist. Erfindungsgemäß sind in den lokalen Datenbasen DB1, DB2, DB3 die gleichen übergreifend benötigten Daten gespeichert, wie in der zentralen Datenbasis ZDB des zentralen Servers ZS.

In den dezentralen Peripherie-Einheiten PBX1,...,PBX4 ist jeweils eine Liste L mit den Adressen der Server-Einheiten des verteilten Kommunikationssystems VKS, d.h. im vorliegenden Ausführungsbeispiel mit den Adressen des zentralen Servers ZS, des dezentralen Servers DS, der externen Server-Einheit S-E und der internen Server-Einheit S-I, hinterlegt. Beim Hochfahren des verteilten Kommunikationssystems VKS prüft jede dezentrale Peripherie-Einheit PBX1**,...,**PBX4 die Qualität einer Verbindung zu den in der Liste aufgeführten Server-Einheiten. Eine Ermittlung der Verbindungsqualität erfolgt dabei beispielsweise durch das Aussenden von Testpaketen PING - in der Figur beispielhaft für die erste Kommunikationsanlage PBX1 dargestellt. Hierbei können bereits zur Verfügung stehende IP-Tools, wie beispielsweise 'Ping' oder 'Traceroute', verwendet werden.

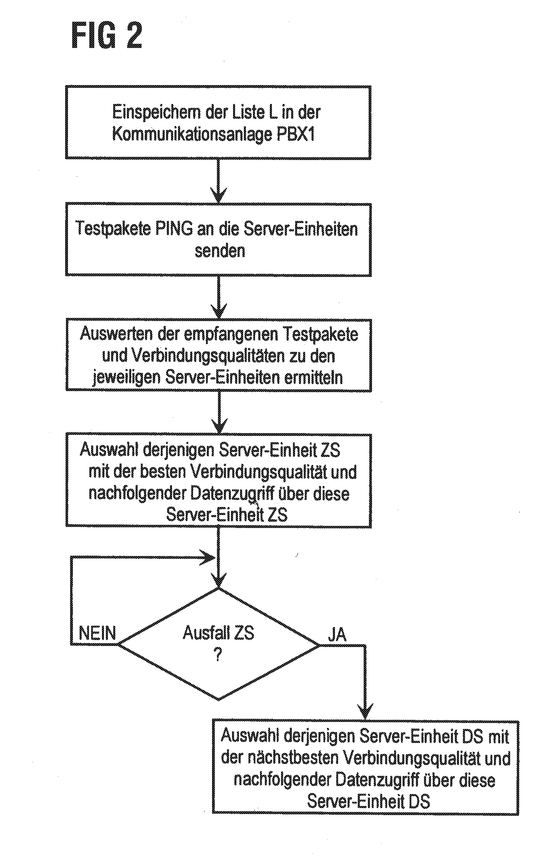

Fig. 2 zeigt ein Ablaufdiagramm zur Veranschaulichung der beim erfindungsgemäßen Verfahren ablaufenden wesentlichen Verfahrensschritte am Beispiel der ersten Kommunikationsanlage PBX1.

Erfindungsgemäß wird in der ersten Kommunikationsanlage PBX1 eine Liste mit den Adressen des zentralen Servers ZS, des dezentralen Servers DS, der externen Server-Einheit S-E und der internen Server-Einheit S-I hinterlegt. Beim Hochfahren des verteilten Kommunikationssystems VKS sendet die erste Kommunikationsanlage PBX1 Testpakete PING an alle in der Liste aufgeführten Server-Einheiten, d.h. an den zentralen Server ZS, an den dezentralen Server DS, an die zweite Kommunikationsanlage PBX2, bzw. die externe Server-Einheit S-E und an die dritte Kommunikationsanlage PBX3 bzw. die interne Server-Einheit S-I.

In einem nächsten Schritt wertet die erste Kommunikationsanlage PBX1 die von den jeweiligen Server-Einheiten zurückgesendeten Testpakete aus und ermittelt mittels der empfangenen Testpakete die Verbindungsqualitäten zu den jeweiligen Server-Einheiten. Für eine Ermittlung der jeweiligen Verbindungsqualitäten können unterschiedliche Kriterien herangezogen werden, beispielsweise kann für eine Ermittlung der Verbindungsqualität die Anzahl der von einem Testpaket PING zwischen der ersten Kommunikationsanlage PBX1 und einer Server-Einheit durchlaufenen Netzknoten oder die Laufzeit eines Testpakets PING zwischen der ersten Kommunikationsanlage PBX1 und einer Server-Einheit herangezogen werden. Da die Möglichkeit besteht, für die Ermittlung der Verbindungsqualitäten unterschiedliche Kriterien heranzuziehen, können auf einfache Weise individuelle Anforderungen unterschiedlicher Teilnehmer berücksichtigt werden.

Im vorliegenden Ausführungsbeispiel wird der zentrale Server ZS als diejenige Server-Einheit mit der besten Verbindungsqualität ermittelt. Somit erfolgen nachfolgend Datenzugriffe ausgehend von der ersten Kommunikationsanlage PBX1 auf den zentralen Server ZS. Durch die Speicherung der übergreifend benötigten Daten in unterschiedlichen Server-Einheiten, wobei unterschiedliche dezentrale Peripherie-Einheiten auf unterschiedliche Server-Einheiten zugreifen können , kann die Netzlast zu einer zentralen Server-Einheit deutlich verringert werden.

Fällt der zentrale Server ZS aus ermittelt die erste Kommunikationsanlage PBX1 diejenige Server-Einheit mit der nächstbesten Verbindungsqualität. Im vorliegenden Ausführungsbeispiel ist dies der dezentrale Server DS. Ab diesem Zeitpunkt erfolgen Datenzugriffe ausgehend von der ersten Kommunikationsanlage PBX1 auf den dezentralen Server DS.

## Patentansprüche

1. Verfahren zur Bereitstellung von Daten in einem verteilten Kommunikationssystem (VKS),
bei dem übergreifend benötigte Daten mehrfach in unterschiedlichen Server-Einheiten (ZS, DS, S-E, S-I) des verteilten Kommunikationssystems (VKS) gespeichert werden, bei dem eine Zugriffe auf die Daten ausführende Peripherie-Einheit (PBX1, PBX4) des verteilten Kommunikationssystems (VKS) einmalig eine Verbindungsqualität zu den jeweiligen Server-Einheiten (ZS, DS, S-E, S-I) ermittelt,
bei dem nachfolgend ein Datenzugriff auf diejenige Server-Einheit (ZS) mit der besten Verbindungsqualität erfolgt, und bei dem bei einem Ausfall dieser Server-Einheit (ZS) ein Datenzugriff auf eine Server-Einheit (DS) mit einer geringeren Verbindungsqualität erfolgt.

2. Verfahren nach Anspruch 1,
**dadurch gekennzeichnet,**
**dass** bei einem Ausfall der Server-Einheit (ZS) mit der besten Verbindungsqualität auf diejenige Server-Einheit (DS) mit der nächstbesten Verbindungsqualität zugegriffen wird.

3. Verfahren nach Anspruch 1 oder 2,
**dadurch gekennzeichnet,**
**dass** in den Peripherie-Einheiten (PBX1, PBX4) jeweils eine Liste (L) mit den Adressen der Server-Einheiten (ZS, DS, S-E, S-I) des verteilten Kommunikationssystems (VKS) gespeichert wird.

4. Verfahren nach Anspruch 3,
**dadurch gekennzeichnet,**
**dass** die Verbindungsqualitäten zu allen in der Liste (L) eingetragenen Server-Einheiten (ZS, DS, S-E, S-I) ermittelt und gespeichert werden.

5. Verfahren nach einem der vorhergehenden Ansprüche,
**dadurch gekennzeichnet,**
**dass** die jeweiligen Verbindungsqualitäten durch die Übermittlung von Testpaketen (PING) ermittelt werden.

6. Verfahren nach Anspruch 5,
**dadurch gekennzeichnet,**
**dass** für die Ermittlung der Verbindungsqualität die Anzahl der von einem Testpaket (PING) zwischen einer Peripherie-Einheit (PBX1, PBX4) und einer Server-Einheit (ZS, DS, S-E, S-I) durchlaufenen Netzknoten herangezogen wird.

7. Verfahren nach Anspruch 5,
**dadurch gekennzeichnet,**
**dass** für die Ermittlung der Verbindungsqualität die Laufzeit des Testpakets (PING) herangezogen wird.

8. Verfahren nach einem der vorhergehenden Ansprüche,
**dadurch gekennzeichnet,**
**dass** die jeweiligen Verbindungsqualitäten beim Hochfahren des verteilten Kommunikationssystems (VKS) ermittelt werden.
